# EUROPEAN PATENT SPECIFICATION

(11) **EP 4 398 562 B1**
(45) Date of publication and mention of the grant of the patent: **19.02.2025**
(21) Application number: 23220207.7
(22) Date of filing: 26.12.2023
(51) Int. Cl.: H04N 1/047

(54) **IMAGE-FORMING APPARATUS AND CONTROLLER**
BILDERZEUGUNGSVORRICHTUNG UND STEUERUNG
APPAREIL DE FORMATION D'IMAGES ET CONTRÔLEUR

(30) Priority: 03.01.2023 CN 202310003277
(43) Date of publication of application: 10.07.2024
(73) Proprietor: Zhuhai Pantum Electronics Co., Ltd., Zhuhai, Guangdong (CN)
(72) Inventor: SHAO, Zhe, Zhuhai, Guangdong (CN); LI, Jieying, Zhuhai, Guangdong (CN)
(74) Representative: Sun, Yiming

(56) References cited:
- EP-A1- 1 892 946
- US-A- 5 933 184
- US-A1- 2004 227 807

## Description

### TECHNICAL FIELD

The present disclosure generally relates to the field of optical scanning technology and, more particularly, relates to an image-forming apparatus and a controller.

### BACKGROUND

A laser printer typically includes an optical scanning unit for exposing a photosensitive member. The optical scanning unit emits laser based on image data. The laser is reflected by a rotating polygon mirror, and reflected laser light is then transmitted through a scanning lens. Transmitted light irradiates a photosensitive drum to expose the photosensitive drum. As the polygon mirror rotates, a laser spot formed on the surface of the photosensitive drum continuously moves to achieve scanning, thereby forming a latent image on the photosensitive member.

An existing scanning lens may have F-θ characteristics. The lens with F-θ characteristics may cause the laser spot to move on the surface of the photosensitive member at a uniform linear velocity when the polygon mirror rotates at a uniform angular velocity. The scanning lens with F-θ characteristics may be configured to perform proper exposure.

However, the scanning lens with F-θ characteristics may have relatively large size and high cost. Therefore, in order to reduce the size and cost of an image-forming apparatus, the scanning lens without F-θ characteristics may be configured.

Patent document US5933184 refers to an image forming apparatus performing correction of scanning deviation due to inaccuracy of the optical system. Patent document US2004227807 refers to an image forming apparatus performing correction of scanning deviation due to absence or over/under-correction of an F-Theta lens arrangement.

In the existing technology, electrical correction may be performed to change an image clock frequency during a scanning operation, such that when the laser spot does not move at a uniform speed on the surface of the photosensitive member, no pixel deviation may be in the laser spot formed on the surface of the photosensitive member.

However, in above-mentioned existing technology, due to the change in the clock frequency, the exposure amounts of the pixels at an end region and a central region of the photosensitive member along a main scanning direction may also change, and such difference in exposure amounts may cause image degradation.

### SUMMARY

One aspect of the present disclosure provides an image-forming apparatus. The image-forming apparatus includes a photosensitive member; a scanning unit, configured to perform laser scanning on the photosensitive member at a non-constant linear speed along a main scanning direction to form an electrostatic latent image; and a controller, configured to make a scanning period T1 corresponding to a first pixel at a central region of the photosensitive member to be not equal to a scanning period T2 corresponding to a second pixel at a non-central region of the photosensitive member. The first pixel and the second pixel are each configured with a light-emitting time period and a non-light-emitting time period; the light-emitting time period satisfies that a light-emitting time length of the light-emitting time period of the first pixel is same as a light-emitting time length of the light-emitting time period of the second pixel; and for printing a fixed page, a light-emitting power of the scanning unit is a preset fixed value.

In an alternative embodiment, the controller is configured to make T1 greater than T2 or T1 smaller than T2.

In an alternative embodiment, the light-emitting time period is configured continuously or discontinuously in a scanning period.

In an alternative embodiment, the light-emitting time period is at a middle section of a scanning period; and the non-light-emitting time period is at a first section and a last section of the scanning period.

In an alternative embodiment, a quantity of the light-emitting time period is at least 1; and/or a quantity of the non-light-emitting time period is at least 1.

In an alternative embodiment, the controller is configured to control the scanning unit to emit light or not to emit light through a video signal.

In an alternative embodiment, a proportion of the light-emitting time period to a total time of the scanning period is not higher than 3/4.

In an alternative embodiment, the non-central region further includes an end region and at least one transition region, wherein a scanning period of a pixel in the end region is shorter than a scanning period of a pixel in the transition region.

In an alternative embodiment, the scanning unit includes a rotating polygon mirror capable of reflecting a laser, the laser reflected by the rotating polygon mirror is applied to the photosensitive member through an image-forming lens, and the image-forming lens is not capable of correcting the laser along the main scanning direction to be linear.

Another aspect of the present disclosure provides a controller, applied to an image-forming apparatus, where an image-forming lens of the image-forming apparatus is not capable of correcting a laser along a main scanning direction to be linear. A controller is configured to make a scanning period T1 corresponding to a first pixel at a central region of a photosensitive member to be not equal to a scanning period T2 corresponding to a second pixel at a non-central region of the photosensitive member, where the first pixel and the second pixel are each configured with a light-emitting time period and a non-light-emitting time period; the light-emitting time period satisfies that a light-emitting time length of the light-emitting time period of the first pixel is same as a light-emitting time length of the light-emitting time period of the second pixel; and for printing a fixed page, a light-emitting power of the scanning unit is a preset fixed value.

Other aspects of the present disclosure may be understood by those skilled in the art in light of the description, the claims, and the drawings of the present disclosure.

### BRIEF DESCRIPTION OF THE DRAWINGS

To clearly describe technical solutions of various embodiments of the present disclosure, the drawings which need to be configured for describing various embodiments are described below. Obviously, the drawings in the following description are merely some embodiments of the present disclosure. For those skilled in the art, other drawings may be obtained in accordance with the drawings without creative efforts.
FIG. 1 illustrates a schematic of a laser-type image-forming apparatus provided by exemplary embodiments of the present disclosure.
FIG. 2 illustrates a cross-sectional view of an optical scanning device along a main scanning direction.
FIG. 3 illustrates a principle schematic of a method for reducing scanning deviation.
FIG. 4 illustrates a region schematic of a photosensitive member along a main scanning direction provided by exemplary embodiments of the present disclosure.
FIG. 5A illustrates a schematic of a proportion of a light-emitting time period of A1 and A2 regions in a control period.
FIG. 5B illustrates a schematic of a proportion of a light-emitting time period of B1 and B2 regions in a control period.
FIG. 5C illustrates a schematic of a proportion of a light-emitting time period of C1 and C2 regions in a control period.
FIG. 5D illustrates a schematic of a proportion of a light-emitting time period of a D region in a control period.
FIG. 6 illustrates a schematic of a light-emitting time period and a toner density provided by exemplary embodiments of the present disclosure.

### DETAILED DESCRIPTION

In order to better understand the technical solutions of the present disclosure, embodiments of the present disclosure are described in detail below with reference to accompanying drawings.

It should be understood that described embodiments are only some of embodiments of the present disclosure, rather than all of embodiments. According to embodiments in present disclosure, all other embodiments obtained by those skilled in the art without making creative efforts should fall within the protection scope of present disclosure.

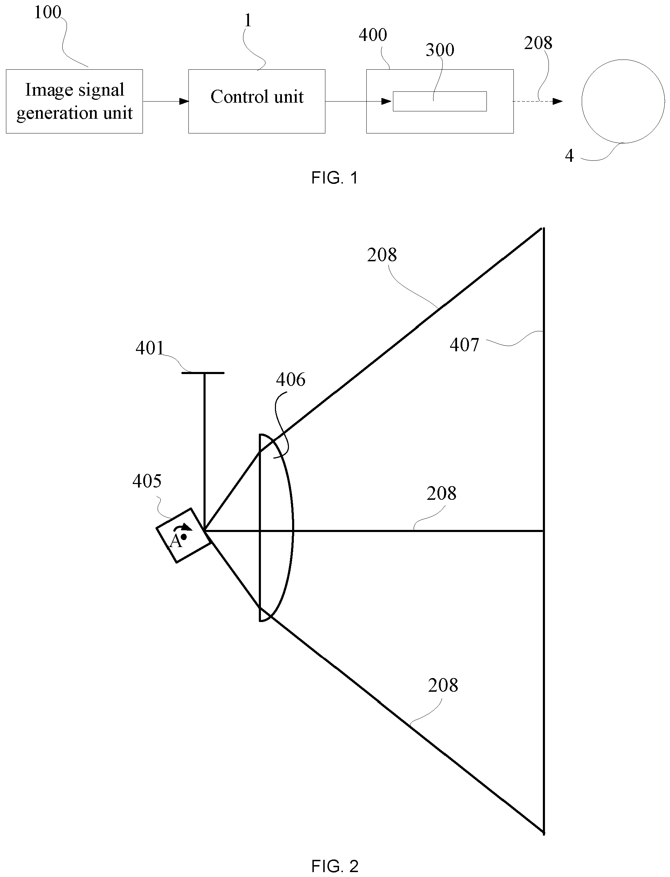

FIG. 1 illustrates a schematic of a laser-type image-forming apparatus provided by exemplary embodiments of the present disclosure. A laser driving unit 300 included in an optical scanning device 400 as an optical scanning unit may be configured to generate scanning light (i.e., laser) 208 in response to an image signal outputted from an image signal generation unit 100 and a control signal outputted from a control unit 1. A photosensitive drum 4 that the surface of the photosensitive drum is charged may be scanned by the laser 208, such that a latent image may be formed on the surface of the photosensitive drum 4. A developing unit (not shown) may apply toner to the latent image to form a toner image corresponding to the latent image. The toner image may be transferred to a recording medium (such as paper), thereby completing a forming process of one image. An example of a controller mentioned in the present disclosure may be a single piece including the image signal generation unit 100 and the control unit 1. An example of the scanning unit mentioned in the present disclosure may be the optical scanning device 400 in FIG. 1 which may function as the scanning unit.

FIG. 2 illustrates a cross-sectional view of the optical scanning device 400 along a main scanning direction. The main scanning direction may be a direction in parallel with the surface of the photosensitive drum 4 and orthogonal to a moving direction on the surface of the photosensitive drum 4. In one exemplary embodiment, the scanning light (e.g., laser) 208 emitted from a light source 401 may be reflected by a reflective surface of a rotating polygon mirror 405 after passing through an optical lens assembly (not shown). The light (e.g., light beam) reflected by the reflective surface may be configured as the scanning light 208, and the scanning light 208 may irradiate onto a scanning surface 407 to form a spot image. In the scenario where the rotating polygon mirror 405 is rotated by a driving unit (not shown) at a constant angular velocity along the direction indicated by an arrow A, the light spot may move on the scanning surface 407 along the main scanning direction, such that the electrostatic latent image may be formed on the scanning surface 407.

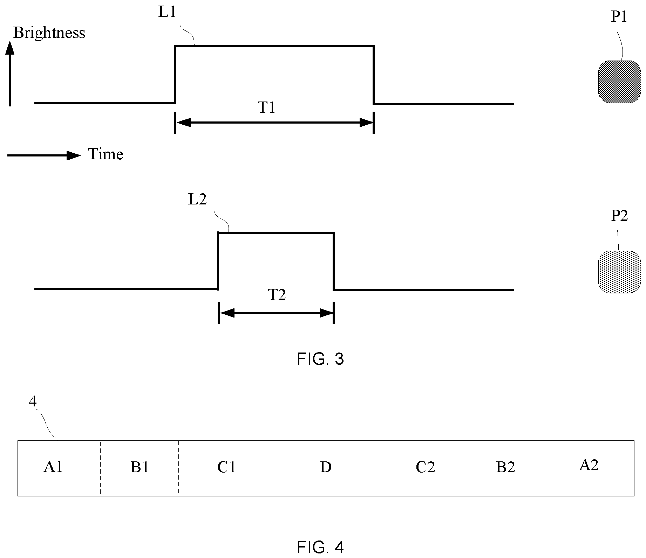

It may be seen that when the rotation angular speed of the rotating polygon mirror 405 is constant, the linear speed of the light spot moving along the main scanning direction may be not constant, that is, the linear speed at the end may be faster than the linear speed at the center. Such linear velocity inconsistency may lead to scanning deviation. Such deviation problem may be solved by designing an image-forming lens 406 as the lens with F-θ characteristics. The F-θ lens may achieve linear scanning with incident light of constant angular velocity. However, the lens with F-θ characteristics may be relatively large and expensive and require more space inside the printer; or in some image-forming apparatuses using the F-θ lens, the characteristics of the F-θ lens may be not sufficient to completely correct the laser along the main scanning direction to be linear. Therefore, a method of adjusting control period to reduce the scanning deviation is disclosed in the existing technology. For the principle of such method shown in FIG. 3, the control period T2 corresponding to image pixels at the end region may be shorter than the control period T1 corresponding to image pixels at the central region. However, it can be seen from FIG. 3 that, due to different lengths of the control periods, when the output power of the laser remains unchanged, actual exposure amounts of all pixels at the end region and the central region may be inconsistent. Such exposure inconsistency may result in different toner densities at the end region and the central region (i.e., P1 and P2 in FIG. 3), which may reduce image quality. In order to solve such problem, a technology solution of adjusting exposure amounts according to the positions may be provided; that is, the laser output power when the end region is scanned may be lower than the laser output power when the central region is scanned. Although such configuration can theoretically overcome above-mentioned problem, relatively high accuracy of the control signal may be needed, and the controller may need to at least ensure that a VIDEO signal and a brightness control signal are maintained to be highly synchronized, which may increase development cost of the image-forming apparatus and increase the types of failures such as signal desynchronization.

### Exemplary embodiment one

To solve above-mentioned problem, embodiments of the present disclosure provide an image-forming apparatus. The image-forming apparatus may include a photosensitive member; a scanning unit, configured to scan the photosensitive member at a non-constant linear speed along the main scanning direction to form an electrostatic latent image on the photosensitive member; and a controller, configured to make the scanning period T1 corresponding to the first pixel at the central region of the photosensitive member to be not equal to the scanning period T2 corresponding to the second pixel at a non-central region of the photosensitive member. Both the first pixel and the second pixel may be configured with a light-emitting time period and a non-light-emitting time period; the light-emitting time period may satisfy that the light-emitting time length of the light-emitting time period of the first pixel may be same as the light-emitting time length of the light-emitting time period of the second pixel. For printing a fixed page, the light-emitting power of the scanning unit may be a preset fixed value.

The non-central region in the present disclosure may further include an end region and at least one transition region, where the scanning period of the pixel in the end region may be shorter than the scanning period of the pixel in the transition region. As shown in FIG. 4, in one embodiment, the photosensitive member 4 may sequentially include a left end region A1, a left sub-end region B1, a left sub-central region C1 and a central region D from the left end to the center. The photosensitive member may sequentially include a central region D, a right sub-central region C2, a right sub-end region B2, and a right end region A2 from the center to the right end. The left sub-end region B1, the left sub-central region C1, the right sub-central region C2, and the right sub-end region B2 may be regarded as transition regions. In one embodiment, it assumes that scanning may be performed from left to right along the main scanning direction.

In one embodiment of the present disclosure, the scanning unit may have the following characteristics that the scanning speed of the end region on the scanning surface 407 may be higher than the scanning speed of the central region, which is because when the rotational angular velocity of the rotating polygon mirror (i.e., deflector) 405 is constant, the reflective surface may be further away from the end region of the photosensitive drum than from the central region of the photosensitive drum. Since the linear velocity is equal to the product of angular velocity and radius, it should be noted that the scanning linear velocity of the end region may be higher than the scanning linear velocity of the central region. That is, the scanning unit in one embodiment may perform laser scanning on the surface of the photosensitive member at a non-constant linear velocity. The image signal generation unit 100 may receive printing information from a computer and generate the VIDEO signal corresponding to image data; and the laser driving unit 300 may supply current to the light source 401 in response to the VIDEO signal to cause the light source 401 to emit light, such that the latent image corresponding to the VIDEO signal may be formed on the scanning surface. The image deviation problem caused by non-constant scanning speed may be solved by setting the period of the VIDEO signal. That is, the period T1 of the VIDEO signal corresponding to the pixel at the non-central region (such as the end region) may be shorter, and the period T2 of the VIDEO signal corresponding to the pixel at the central region may be longer. In one embodiment of the present disclosure, it may further configure the time of the VIDEO signal at an ON state (i.e., the laser emits light) in a period; and for remaining time of such period, the VIDEO signal may be at an OFF state (i.e., the laser does not emit light). That is, the VIDEO signal may be configured to control the scanning unit to emit light or not to emit light.

It may be understood that, in another embodiment of the present disclosure, the period T1 of the VIDEO signal corresponding to the pixel at the non-central region may be longer, and the period T2 of the VIDEO signal corresponding to the pixel at the central region may be shorter, which is due to "over-correction" of above-mentioned image-forming lens 406. At this point, the scanning speed of the end region on the scanning surface 407 may be lower than the scanning speed of the central region on the scanning surface 407. To solve such problem, the controller may be configured to make that T1 is smaller than T2.

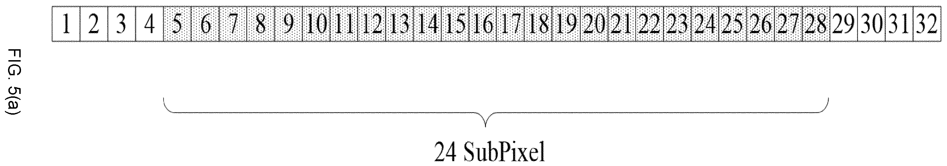

The first VIDEO signal example is shown in FIG. 5A, where SubPixel refers to the light-emitting unit time of the laser. FIG. 5A may correspond to one control period in the A1 and A2 regions in FIG. 4. In one embodiment, one control period may include 32 SubPixels; 24 SubPixels in the middle section of the control period may be configured to be at the ON state; and 4 SubPixels in the first section and last section of the control period may be configured to be at the OFF state.

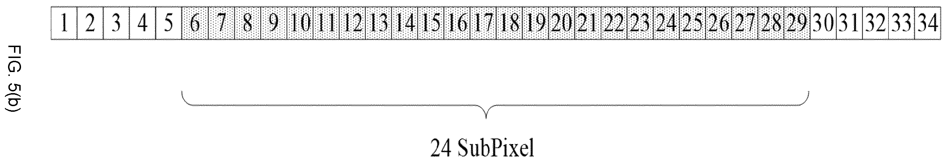

The second VIDEO signal example is shown in FIG. 5B. FIG. 5B may correspond to one control period in the B1 and B2 regions in FIG. 4. In one embodiment, one control period may include 34 SubPixels; 24 SubPixels in the middle section of the control period may be configured to be at the ON state; and 5 SubPixels in the first section and last section of the control period may be configured to be at the OFF state.

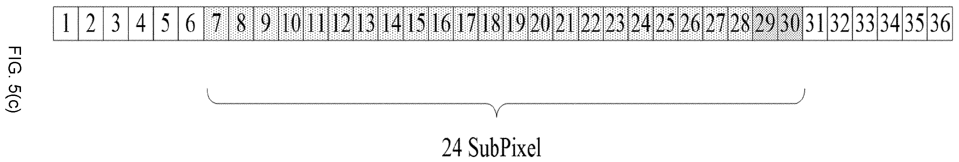

The third VIDEO signal example is shown in FIG. 5C. FIG. 5C may correspond to one control period in the C1 and C2 regions in FIG. 4. In one embodiment, one control period may include 36 SubPixels; 24 SubPixels in the middle section of the control period may be configured to be at the ON state; and 6 SubPixels in the first section and last section of the control period may be configured to be at the OFF state.

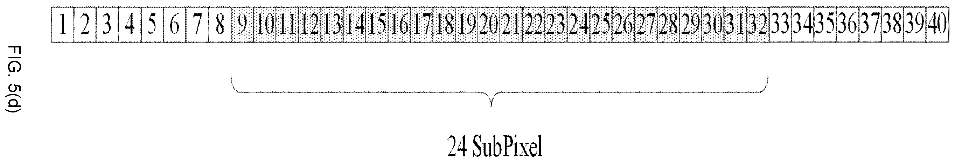

The fourth VIDEO signal example is shown in FIG. 5D. FIG. 5D may correspond to one control period in region D in FIG. 4. In one embodiment, one control period may include 40 SubPixels; 24 SubPixels in the middle section of the control period may be configured to be at the ON state; and 8 SubPixels in the first section and last section of the control period may be configured to be at the OFF state.

It may be seen from FIGS. 5A-5D that even if the control periods of different regions along the scanning direction change, the time lengths of the VIDEO signal at the ON state may remain unchanged. Therefore, when laser emission intensity at one scanning period is constant, the exposure amount of one pixel may be not changed, such that the image density may not change due to different regions along the main scanning direction. Furthermore, since the laser brightness is not adjusted and only the VIDEO signal is configured in one embodiment, there is no need to control the VIDEO signal and current signal simultaneously as in the existing technology which may increase signal control complexity. Therefore, the effect of simplifying control difficulty and adjustment difficulty may be achieved in one embodiment. It may be understood that in order to achieve above effect, it may only need to make different regions have same light-emitting time length, and there is no requirement for specific SubPixel positions that the VIDEO signal is at the ON state, that is, the positions that the VIDEO signal is at the ON state may be at the first section or last section of entire control period. Similarly, the SubPixels that the VIDEO signal is at the ON state may be continuous or non-continuous. For example, 24 SubPixels that the VIDEO signal is at the ON state may be continuous; or the SubPixels that the VIDEO signal is at the ON state may be configured to be spaced apart from the SubPixels that the VIDEO signal is at the ON state. In one embodiment, the number of light-emitting time periods may be at least 1, and/or the number of non-light-emitting time periods may be at least 1. Exemplarily, in the examples shown in FIGS. 5A-5D, the number of light-emitting time periods may be 1, and the number of non-light-emitting time periods may be 2. Under the condition that the exposure amount remains unchanged, the number of light-emitting time periods may also be configured to 2, and the number of non-light-emitting time periods may be configured to 1, which may not be limited in the present disclosure.

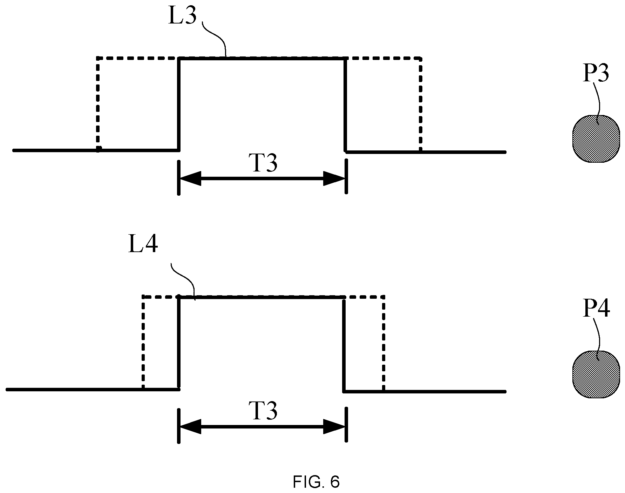

FIG. 6 illustrates a schematic of one embodiment of the present disclosure. L3 denotes a schematic of the light-emitting time period at the central region, L4 denotes a schematic of the light-emitting time period at the end region, the dotted box represents the control period, and T3 denotes actual light-emitting time period in the control period. It may be seen from FIG. 6 that although the control periods at the end region and the central region are different, actual light-emitting time periods may be same. Therefore, the toner density P3 at the central region and the toner density P4 at the end regions may be same without density difference.

It may be seen from above-mentioned principle that the maximum value of the light-emitting time period should not exceed total time length of one scanning period at the end region, otherwise the light-emitting time periods at the end region and other regions may be not consistent with each other. If the proportion of the light-emitting time period to total time of the scanning period is no more than 3/4, the problem of inconsistent pixel widths may also be reduced. Pixel width refers to the product of exposure time of unit pixel and the scanning linear velocity. In the present disclosure, the light-emitting time periods in the scanning period of the pixels at the central region and the non-central region may be same, but the scanning linear velocities may be different, and theoretically the pixel widths may be different. If the proportion of the light-emitting time period to total time of the scanning period is reduced to less than 3/4, the problem of inconsistent pixel widths may be no longer obvious and the impact on image quality may be reduced.

In an optional implementation manner, the scanning unit may include a rotating polygon mirror for reflecting laser. The laser reflected by the rotating polygon mirror may be applied to the photosensitive member through the image-forming lens, and the image-forming lens cannot correct the laser along the main scanning direction to be linear. That is, the image-forming lens used in one embodiment may have certain optical correction characteristics but may not completely correct the scanning light beam to be linear. In such case, above-mentioned manner for configuring the light-emitting time period and the non-light-emitting time period may also be used to solve such problem.

### Exemplary embodiment two

The present disclosure further provides a controller, applied to the image-forming apparatus. The image-forming lens used in the image-forming apparatus cannot correct the laser along the main scanning direction to be linear. The controller may be configured to make the scanning period T1 corresponding to the first pixel at the central region of the photosensitive member to be not equal to the scanning period T2 corresponding to the second pixel at the non-central region of the photosensitive member. Both the first pixel and the second pixel may be configured with the light-emitting time period and the non-light-emitting time period; the light-emitting time period may satisfy that the light-emitting time length of the light-emitting time period of the first pixel may be same as the light-emitting time length of the light-emitting time period of the second pixel. For printing a fixed page, the light-emitting power of the scanning unit may be a preset fixed value.

The controller used in exemplary embodiment two, same as the controller in exemplary embodiment one, may be applied to the image-forming apparatus without the F-θ lens and may also be applied to the image-forming apparatus including an optical correction lens that the correction characteristics of the lens are not sufficient to completely correct the scanning light beam to be linear. In one embodiment, the controller may include the image signal generation unit 100 and the control unit 1 as shown in FIG. 1. The controller may control the scanning unit to emit light or not to emit light through the VIDEO signal. Parts of the controller in exemplary embodiment two same as those in exemplary embodiment one may not be described in detail herein.

Compared with the existing technology, the technical solutions provided by the present disclosure may achieve at least the following beneficial effects.

Compared with the existing technology, in embodiments of the present disclosure, the exposure amounts of the pixels at different regions along the main scanning direction may be same, which may reduce the problem of inconsistent image density at different regions which easily occurs in the existing technology, thereby improving image quality. Furthermore, the control logic of the present disclosure may be simple and easy to be configured and adjusted.

The above are only optional embodiments of the present disclosure and are not intended to limit the present disclosure. For those skilled in the art, the present disclosure may have various modifications and changes.

## Claims

1. An image-forming apparatus, comprising:
a photosensitive member;
a scanning unit, configured to perform laser scanning on the photosensitive member at a non-constant linear speed along a main scanning direction to form an electrostatic latent image; and
a controller, configured to make a scanning period T1 corresponding to a first pixel at a central region of the photosensitive member to be not equal to a scanning period T2 corresponding to a second pixel at a non-central region of the photosensitive member, wherein:
the first pixel and the second pixel are each configured with a light-emitting time period and a non-light-emitting time period;
**characterized in that** the light-emitting time period satisfies that a light-emitting time length of the light-emitting time period of the first pixel is same as a light-emitting time length of the light-emitting time period of the second pixel; and for printing a fixed page, a light-emitting power of the scanning unit is a preset fixed value.

2. The image-forming apparatus according to claim 1, wherein:
the controller is configured to make T1 greater than T2 or T1 smaller than T2.

3. The image-forming apparatus according to claim 1, wherein:
the light-emitting time period is configured continuously or discontinuously in a scanning period.

4. The image-forming apparatus according to claim 1, wherein:
the light-emitting time period is at a middle section of a scanning period; and the non-light-emitting time period is at a first section and a last section of the scanning period.

5. The image-forming apparatus according to claim 1, wherein:
a quantity of the light-emitting time period is at least 1; and/or a quantity of the non-light-emitting time period is at least 1.

6. The image-forming apparatus according to claim 1, wherein:
the controller is configured to control the scanning unit to emit light or not to emit light through a video signal.

7. The image-forming apparatus according to claim 1, wherein:
a proportion of the light-emitting time period to a total time of the scanning period is not higher than 3/4.

8. The image-forming apparatus according to claim 1, wherein:
the non-central region further includes an end region and at least one transition region, wherein a scanning period of a pixel in the end region is shorter than a scanning period of a pixel in the transition region.

9. The image-forming apparatus according to claim 1, wherein:
the scanning unit includes a rotating polygon mirror capable of reflecting a laser, the laser reflected by the rotating polygon mirror is applied to the photosensitive member through an image-forming lens, and the image-forming lens is not capable of correcting the laser along the main scanning direction to be linear.

10. A controller, applied to an image-forming apparatus, wherein an image-forming lens of the image-forming apparatus is not capable of correcting a laser along a main scanning direction to be linear, wherein:
the controller is configured to make a scanning period T1 corresponding to a first pixel at a central region of a photosensitive member to be not equal to a scanning period T2 corresponding to a second pixel at a non-central region of the photosensitive member, wherein the first pixel and the second pixel are each configured with a light-emitting time period and a non-light-emitting time period;
**characterized in that** the light-emitting time period satisfies that a light-emitting time length of the light-emitting time period of the first pixel is same as a light-emitting time length of the light-emitting time period of the second pixel; and for printing a fixed page, a light-emitting power of the scanning unit is a preset fixed value.

11. The controller according to claim 10, wherein: the controller is configured to make T1 greater than T2 or T1 smaller than T2.

12. The controller according to claim 10, wherein: the light-emitting time period is at a middle section of a scanning period; and the non-light-emitting time period is at a first section and a last section of the scanning period.

13. The controller according to claim 10, wherein: a quantity of the light-emitting time period is at least 1; and/or a quantity of the non-light-emitting time period is at least 1.

14. The controller according to claim 10, wherein: a proportion of the light-emitting time period to a total time of the scanning period is not higher than 3/4.

15. The controller according to claim 10, wherein:
the non-central region further includes an end region and at least one transition region, wherein a scanning period of a pixel in the end region is shorter than a scanning period of a pixel in the transition region.

## Patentansprüche

1. Eine Bilderzeugungsvorrichtung, umfassend:
ein lichtempfindliches Element;
eine Abtastungseinheit, konfiguriert, um eine Laserabtastung des lichtempfindlichen Elements mit nicht konstanter linearer Geschwindigkeit entlang einer Hauptabtastrichtung durchzuführen, um ein elektrostatisches latentes Bild zu erzeugen; und
eine Steuereinheit, konfiguriert, um eine Abtastperiode T1, die einem ersten Pixel in einem zentralen Bereich des lichtempfindlichen Elements entspricht, ungleich einer Abtastperiode T2, die einem zweiten Pixel in einem nicht zentralen Bereich des lichtempfindlichen Elements entspricht, einzustellen, wobei:
das erste Pixel und das zweite Pixel jeweils mit einer Lichtemissionszeitperiode und einer Nicht-Lichtemissionszeitperiode konfiguriert sind;
**dadurch gekennzeichnet, dass** die Lichtemissionszeitperiode erfüllt, dass eine Lichtemissionszeitdauer der Lichtemissionszeitperiode des ersten Pixels dieselbe ist wie eine Lichtemissionszeitdauer der Lichtemissionszeitperiode des zweiten Pixels; und für das Drucken einer festen Seite eine Lichtemissionsleistung der Abtastungseinheit ein voreingestellter fester Wert ist.

2. Die Bilderzeugungsvorrichtung nach Anspruch 1, wobei:
die Steuereinheit konfiguriert ist, T1 größer als T2 oder T1 kleiner als T2 einzustellen.

3. Die Bilderzeugungsvorrichtung nach Anspruch 1, wobei:
die Lichtemissionszeitperiode kontinuierlich oder diskontinuierlich in einer Abtastperiode konfiguriert ist.

4. Die Bilderzeugungsvorrichtung nach Anspruch 1, wobei:
die Lichtemissionszeitperiode in einem mittleren Abschnitt einer Abtastperiode liegt; und die Nicht-Lichtemissionszeitperiode in einem ersten Abschnitt und einem letzten Abschnitt der Abtastperiode liegt.

5. Die Bilderzeugungsvorrichtung nach Anspruch 1, wobei:
eine Anzahl der Lichtemissionszeitperiode mindestens 1 beträgt; und/oder eine Anzahl der Nicht-Lichtemissionszeitperiode mindestens 1 beträgt.

6. Die Bilderzeugungsvorrichtung nach Anspruch 1, wobei:
die Steuereinheit konfiguriert ist, die Abtastungseinheit über ein Videosignal zu steuern, um Licht auszusenden oder nicht auszusenden.

7. Die Bilderzeugungsvorrichtung nach Anspruch 1, wobei:
ein Verhältnis der Lichtemissionszeitperiode zur Gesamtzeit der Abtastperiode nicht höher als 3/4 ist.

8. Die Bilderzeugungsvorrichtung nach Anspruch 1, wobei:
der nicht zentrale Bereich weiterhin einen Endbereich und mindestens einen Übergangsbereich umfasst, wobei eine Abtastperiode eines Pixels im Endbereich kürzer ist als eine Abtastperiode eines Pixels im Übergangsbereich.

9. Die Bilderzeugungsvorrichtung nach Anspruch 1, wobei:
die Abtastungseinheit einen rotierenden Polygonspiegel umfasst, der in der Lage ist, einen Laser zu reflektieren, wobei der vom rotierenden Polygonspiegel reflektierte Laser über eine abbildungsbildende Linse auf das lichtempfindliche Element angewendet wird, und die abbildungsbildende Linse nicht in der Lage ist, den Laser entlang der Hauptabtastrichtung linear zu korrigieren.

10. Eine Steuereinheit, angewendet auf eine Bilderzeugungsvorrichtung, wobei eine abbildungsbildende Linse der Bilderzeugungsvorrichtung nicht in der Lage ist, einen Laser entlang einer Hauptabtastrichtung linear zu korrigieren, wobei:
die Steuereinheit konfiguriert ist, eine Abtastperiode T1, die einem ersten Pixel in einem zentralen Bereich eines lichtempfindlichen Elements entspricht, ungleich einer Abtastperiode T2, die einem zweiten Pixel in einem nicht zentralen Bereich des lichtempfindlichen Elements entspricht, einzustellen, wobei das erste Pixel und das zweite Pixel jeweils mit einer Lichtemissionszeitperiode und einer Nicht-Lichtemissionszeitperiode konfiguriert sind;
**dadurch gekennzeichnet, dass** die Lichtemissionszeitperiode erfüllt, dass eine Lichtemissionszeitdauer der Lichtemissionszeitperiode des ersten Pixels dieselbe ist wie eine Lichtemissionszeitdauer der Lichtemissionszeitperiode des zweiten Pixels; und für das Drucken einer festen Seite eine Lichtemissionsleistung der Abtastungseinheit ein voreingestellter fester Wert ist.

11. Die Steuereinheit nach Anspruch 10, wobei:
die Steuereinheit konfiguriert ist, T1 größer als T2 oder T1 kleiner als T2 einzustellen.

12. Die Steuereinheit nach Anspruch 10, wobei:
die Lichtemissionszeitperiode in einem mittleren Abschnitt einer Abtastperiode liegt; und die Nicht-Lichtemissionszeitperiode in einem ersten Abschnitt und einem letzten Abschnitt der Abtastperiode liegt.

13. Die Steuereinheit nach Anspruch 10, wobei:
eine Anzahl der Lichtemissionszeitperiode mindestens 1 beträgt; und/oder eine Anzahl der Nicht-Lichtemissionszeitperiode mindestens 1 beträgt.

14. Die Steuereinheit nach Anspruch 10, wobei:
ein Verhältnis der Lichtemissionszeitperiode zur Gesamtzeit der Abtastperiode nicht höher als 3/4 ist.

15. Die Steuereinheit nach Anspruch 10, wobei:
der nicht zentrale Bereich weiterhin einen Endbereich und mindestens einen Übergangsbereich umfasst, wobei eine Abtastperiode eines Pixels im Endbereich kürzer ist als eine Abtastperiode eines Pixels im Übergangsbereich.

## Revendications

1. Un appareil de formation d'image, comprenant :
un élément photosensible ;
une unité de balayage, configurée pour effectuer un balayage laser de l'élément photosensible à une vitesse linéaire non constante le long d'une direction de balayage principale afin de former une image latente électrostatique ; et
un contrôleur, configuré pour rendre une période de balayage T1 correspondant à un premier pixel dans une région centrale de l'élément photosensible différente d'une période de balayage T2 correspondant à un second pixel dans une région non centrale de l'élément photosensible, où :
le premier pixel et le second pixel sont chacun configurés avec une période d'émission de lumière et une période de non-émission de lumière ;
**caractérisé en ce que** la période d'émission de lumière satisfait à la condition selon laquelle une durée d'émission de lumière de la période d'émission de lumière du premier pixel est identique à une durée d'émission de lumière de la période d'émission de lumière du second pixel ; et que, pour l'impression d'une page fixe, une puissance d'émission de lumière de l'unité de balayage est une valeur fixe prédéfinie.

2. L'appareil de formation d'image selon la revendication 1, dans lequel :
le contrôleur est configuré pour rendre T1 supérieur à T2 ou T1 inférieur à T2.

3. L'appareil de formation d'image selon la revendication 1, dans lequel :
la période d'émission de lumière est configurée de manière continue ou discontinue dans une période de balayage.

4. L'appareil de formation d'image selon la revendication 1, dans lequel :
la période d'émission de lumière se situe dans une section centrale d'une période de balayage ; et la période de non-émission de lumière se situe dans une première section et une dernière section de la période de balayage.

5. L'appareil de formation d'image selon la revendication 1, dans lequel :
une quantité de périodes d'émission de lumière est au moins égale à 1 ; et/ou une quantité de périodes de non-émission de lumière est au moins égale à 1.

6. L'appareil de formation d'image selon la revendication 1, dans lequel :
le contrôleur est configuré pour contrôler l'unité de balayage afin d'émettre ou de ne pas émettre de lumière via un signal vidéo.

7. L'appareil de formation d'image selon la revendication 1, dans lequel :
une proportion de la période d'émission de lumière par rapport au temps total de la période de balayage n'est pas supérieure à 3/4.

8. L'appareil de formation d'image selon la revendication 1, dans lequel :
la région non centrale comprend en outre une région terminale et au moins une région de transition, où une période de balayage d'un pixel dans la région terminale est plus courte qu'une période de balayage d'un pixel dans la région de transition.

9. L'appareil de formation d'image selon la revendication 1, dans lequel :
l'unité de balayage comprend un miroir polygonal rotatif capable de réfléchir un laser, le laser réfléchi par le miroir polygonal rotatif étant appliqué à l'élément photosensible à travers une lentille de formation d'image, et la lentille de formation d'image n'étant pas capable de corriger le laser le long de la direction de balayage principale pour le rendre linéaire.

10. Un contrôleur, appliqué à un appareil de formation d'image, dans lequel une lentille de formation d'image de l'appareil de formation d'image n'est pas capable de corriger un laser le long d'une direction de balayage principale pour le rendre linéaire, où :
le contrôleur est configuré pour rendre une période de balayage T1 correspondant à un premier pixel dans une région centrale d'un élément photosensible différente d'une période de balayage T2 correspondant à un second pixel dans une région non centrale de l'élément photosensible, où le premier pixel et le second pixel sont chacun configurés avec une période d'émission de lumière et une période de non-émission de lumière ;
**caractérisé en ce que** la période d'émission de lumière satisfait à la condition selon laquelle une durée d'émission de lumière de la période d'émission de lumière du premier pixel est identique à une durée d'émission de lumière de la période d'émission de lumière du second pixel ; et que, pour l'impression d'une page fixe, une puissance d'émission de lumière de l'unité de balayage est une valeur fixe prédéfinie.

11. Le contrôleur selon la revendication 10, dans lequel :
le contrôleur est configuré pour rendre T1 supérieur à T2 ou T1 inférieur à T2.

12. Le contrôleur selon la revendication 10, dans lequel :
la période d'émission de lumière se situe dans une section centrale d'une période de balayage ; et la période de non-émission de lumière se situe dans une première section et une dernière section de la période de balayage.

13. Le contrôleur selon la revendication 10, dans lequel :
une quantité de périodes d'émission de lumière est au moins égale à 1 ; et/ou une quantité de périodes de non-émission de lumière est au moins égale à 1.

14. Le contrôleur selon la revendication 10, dans lequel :
une proportion de la période d'émission de lumière par rapport au temps total de la période de balayage n'est pas supérieure à 3/4.

15. Le contrôleur selon la revendication 10, dans lequel :
la région non centrale comprend en outre une région terminale et au moins une région de transition, où une période de balayage d'un pixel dans la région terminale est plus courte qu'une période de balayage d'un pixel dans la région de transition.
